# EUROPEAN PATENT SPECIFICATION

(11) **EP 2 196 386 B1**
(45) Date of publication and mention of the grant of the patent: **28.11.2012**
(21) Application number: 10003570.8
(22) Date of filing: 29.11.2001
(51) Int. Cl.: B62K 25/24, B62K 25/00, B62K 5/02, B62K 5/08, B60G 3/20

(54) **Motorcycle-type vehicle**
Motorradartiges Fahrzeug
Véhicule de type motocyclette

(30) Priority: 29.11.2000 GB 0029136
(43) Date of publication of application: 16.06.2010
(62) Divisional of application: 01998472.3
(73) Proprietor: The Four Wheeled Motorcycle Company Limited, Enfield Middlesex EN2 8HR (GB)
(72) Inventor: Shotter, Nicholas, Richard, Enfield Middlesex EN2 8HR (GB)
(74) Representative: Cameron, Stewart

(56) References cited:
- WO-A1-03/018390
- US-A- 4 890 857
- US-B1- 6 263 994

## Description

The present invention relates to motorcycle-type vehicles of the kind in which the controlling rider controls the angle of lateral tilt by a combination of steering control and balancing body movements. Conventionally, such vehicles have a single front wheel and a single motor-driven rear wheel. As is well-known, such vehicles due to their narrow width can travel through narrow gaps in congested traffic and have good acceleration and fuel economy. If, however, for any reason a tyre on one of the wheels temporarily loses grip the rider may not be able to prevent the vehicle from tipping over.

To increase the stability of such vehicles, there have been several proposals to duplicate either the front wheel or the rear wheel and to connect the two wheels to opposite ends of a balancing beam member pivoted to the vehicle frame at its mid point, thereby permitting equal movement of the wheels, one upwardly and the other downwardly as the vehicle tilts. Such an arrangement can provide greater stability when only one of the two wheels meets an obstruction on the road. The vehicle is, however still at risk of toppling if the wheels lose adhesion to the road.

The document WO 01/920841 A1 shows a motorcycle-type vehicle forming part of the prior art according to Article 54(3) EPC.

United States Patent No. 4,756,379 to Kawano et al. describes a motorcycle according to the closest prior art. This motorcycle has a swing arm front suspension system, the system comprising:
a swing arm for its wheel, the swing arm being pivotally mounted at one end for angular movement about a first transverse axis of the vehicle;
a stub axle assembly supporting the other end of the swing arm on its respective wheel; the wheel being connected to the body structure through a suspension having a first end linked to the wheel and a second end, a parallelogram-type linkage formed by the swing arm, an upper arm pivotally mounted at a rear end for angular movement about a second transverse axis of the vehicle, spaced above the first transverse axis and a strut articulated at its upper end to the upper arm and at its lower end to the other end of the swing arm.

Another system is described in the German Utility Model No. DE 295 10 091 U1 which describes a swing arm which overlies a rear portion of a wheel during steering.

According to the invention, there is provided a steering and suspension system as defined in claim 1.

The arrangement is particularly suitable for motorcycle-type vehicles having a pair of front wheels, preferably including upper and lower steering rod systems for interconnecting a rider-operated steering control with each stub axle to form an Ackermann-type steering geometry, the upper and lower rod systems being interconnected for the transmission, of torques therebetween along the length direct of the struts.

Preferred embodiments of the invention will now be further described by way of example with reference to the accompanying drawings, in which:
Fig. 1 is a perspective view of one form of a four-wheeled motorcycle-type vehicle in accordance with the invention,
Fig. 2 is a simplified front view of the vehicle being ridden along a straight road,
Fig. 3 is a similar view of the vehicle being ridden round a right-hand bond,
Fig. 4 is a diagrammatic perspective view of the rear suspension of the vehicle with its wheels, driving motors and other components omitted for clarity,
Fig. 5 is a rear view of the rear suspension with the left-hand wheel riding over a bump while the vehicle is being ridden along a straight road,
Fig. 6 is a view similar to Fig. 5 when the vehicle is ridden round a right-hand curve,
Fig. 7 is perspective exploded view of the connection between a bake sector and a suspension arm,
Figs. 8-10 show diagrammatically the behaviour of three different forms of suspension in response to variations in road surface;,
Fig. 11 shows diagrammatically in more detail a suspension of the kind shown in Fig. 10, .
Figs. 12 and 13 are respectively front and rear perspective views of the chassis of a vehicle having a suspension of the kind shown in Figs. 10 and 12,
Fig. 14 shows a portion of Fig. 12 on an enlarged scale,
Fig. 15 shows the portion shown in Fig. 14 in side elevation,
Fig. 16 is a view similar to Fig. 14 of a variation of front suspension and steering,
Fig. 17 is a diagrammatic side view of the driving arrangement for one of the rear wheels,
Fig. 18 is an axial sectional view of the pivotal connection between a suspension arm and the chassis,
Fig. 19 is a cross section of a variant of Fig. 18,
Fig. 20 shows diagrammatically a hydraulic equivalent to the mechanical balance beam arrangement of the previous figures,
Fig. 21 shows diagrammatically in side elevation a vehicle carrying two-wheeled load containers,
Fig. 22 is a similar view of the vehicle with the containers removed, and
Fig. 23 shows the containers with handles extended.

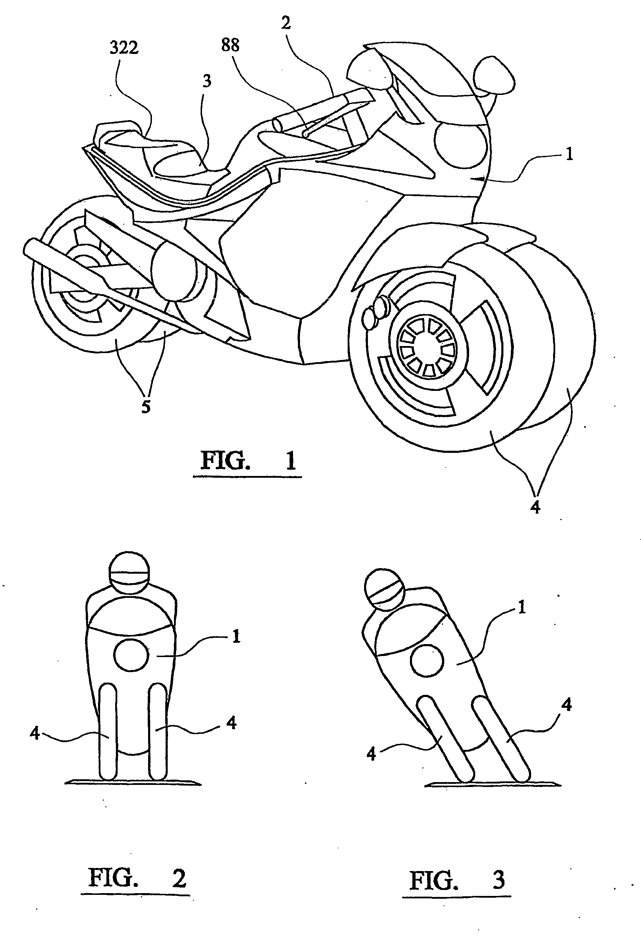

The motorcycle-type vehicle shown in Figs. 1 and 2 is of generally conventional design insofar as it includes a frame supporting a fairing 1 within which is housed an engine and gearbox (not shown in detail), handlebars 2 for steering the vehicle, a seat 3 for the rider and an additional seat 4 for a pillion passenger.

The vehicle differs, however, from conventional design in that it has a pair of front wheels 4 and a pair of rear wheels 5. The spacing between the pair of front wheels 4 and also the spacing between the rear wheels 5 is sufficiently small to allow them to lie within the overall envelope of the vehicle as can be seen in Fig. 2.

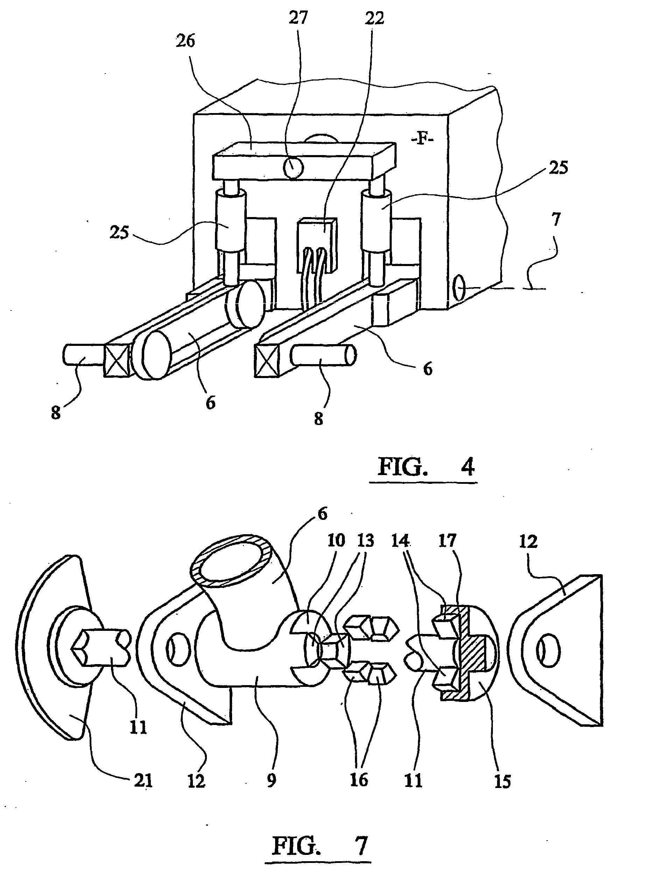

As can be seen in Fig. 3, the rider can, normally, tilt the vehicle to counteract the effect of centrifugal force when rounding a bend. For this purpose, each wheel 4, 5 is mounted on the end of a respective swing arm. Fig. 4 shows diagrammatically the arrangement for the rear swing arms 6 which are each independently pivotally mounted at their forward ends on the frame F for pivotal movement about the same transverse axis 7 which is horizontal when the vehicle is upright. At its trailing end, each swing arm 6 carries an axle 8 in which the respective rear wheel 5 is mounted.

As can be seen in Fig. 7, each swing arm 6 (here shown as being of tubular form) is secured to a cylindrical boss 9 formed with an internal bore 10 by means of which it is pivotally mounted on a shaft 11 which in turn is pivotally mounted in lugs 12 secured to the frame F. At its outer end (relative to the vehicle) the boss 9 is formed with a pair of dogs 13 interposed (with substantial angular clearance) between a pair of dogs 14 carried by a disc 15 secured to the shaft 11. The dogs 13 and 14 thus provide a lost-motion connection between the swing arm 6 and the shaft 11. Cushioning elements 16, for example, of rubber, may be interposed between the dogs 13 and 14. These are retained by a cylindrical sleeve portion 17 of the disc 15.

The inner end of the shaft 11 carries a disc sector 21 which forms part of the disc brake assembly including a brake caliper 22 (Fig. 4) which can be engaged to arrest the disc 21 and shaft 11 and thereby limit the swinging movement of the swing arm 6 to the small range permitted by the clearance between the dogs 13 and 14 as further limited by the cushioning elements 16.

As shown in Fig. 4, each of the rear swing arm 6 is articulated to the lower end of a conventional suspension strut 25 at a point near but spaced from the axis 7. The upper ends of the two suspension struts 25 are articulated to the opposite ends of a beam 26 which is pivoted at its mid point on a shaft 27 carried by the frame F. Each suspension strut 25 is of the conventional kind having an internal spring and damping arrangement.

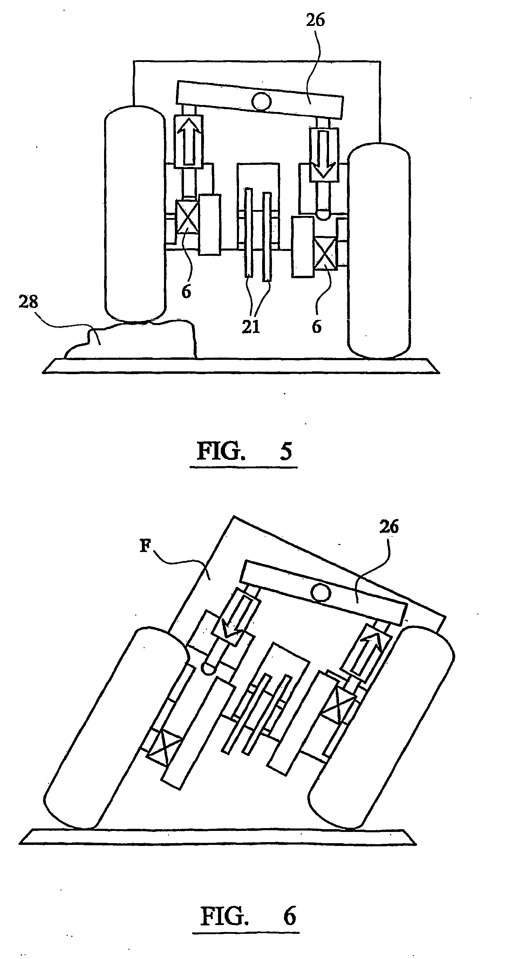

Under normal riding conditions, the brake 22 is disengaged so that the swing arms 6 are free to swing up and down under the control of the two suspension struts 2.5 and the beam 26. Thus, the suspension can accommodate a bump 28 encountered by one wheel as shown in Fig. 5. Further, as shown in Fig. 6, the rider can lean at an appropriate angle when rounding a bend. If, however, the wheels lose their grip on the ground, the brake caliper 22 can be quickly energised to arrest the two brake discs 21, for example, the position shown in Fig. 6 so that the vehicle is then prevented from tipping over further, apart from the small movement allowed by the lost motion connection 13, 14, 16.

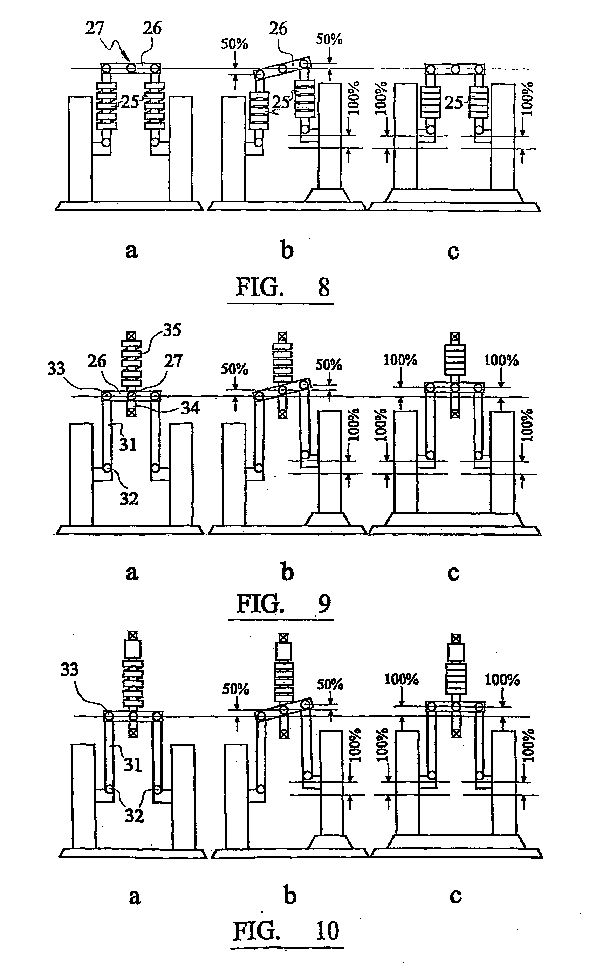

Figs. 8a-c show the response of the suspension shown in Figs. 1-7 to three different road surface situations. Fig. 8a shows a smooth road surface with the two spring units 25 equally compressed. In Fig. 8b, only the right-hand wheel has encountered a bump in the road surface (hereinafter referred to as a **b** situation) resulting in the beam 26 turning through a sufficient angle to cause approximately equal compression in the two spring units 25 which are thus acting in series. When both wheels meet a bump of corresponding height as shown in Fig. c (hereinafter referred to as a **c** situation), both wheels are raised simultaneously thereby compressing both suspension units 25 equally without turning the beam 26 about its pivot 27. In this situation, the two spring units act in parallel giving an effective spring rate approximately four times greater than that in the case of Fig. 8b.

Where this variation in spring rate depending on whether one or both wheels encounters a bump is considered unacceptable, the arrangement shown in Fig. 9 may be used. Here the swing arms 6 are connected to the respective ends of the balance beam 26 by links 31 of constant length having a ball joint 32, 33 at each end. The pivot 27 or the balance beam 26 is movable along a rectilinear guide way 34 secured to the vehicle frame. A single suspension unit 35 acts between the movable pivot 27 and the frame of the vehicle.

The arrangement shown in Fig. 9 gives the same spring rate for both **b** and **c** type situations but does not alter the potential wheel movement ratio of about 2:1. In practice, this ratio would probably be reduced due to the **b** situation involving half the moving mass of the **c** situation, resulting in the **b** situation requiring less damping and in that the pivot point in the **b** situation has half the acceleration of the pivot point in the **c** situation so that there is less damping in the **b** situation than in the **c** situation. The reduced mass and reduced pivot point acceleration in the **b** situation tend to achieve similar damping characteristics with the possibility of a damping design being able to cope satisfactorily with both **b** and **c** type situations.

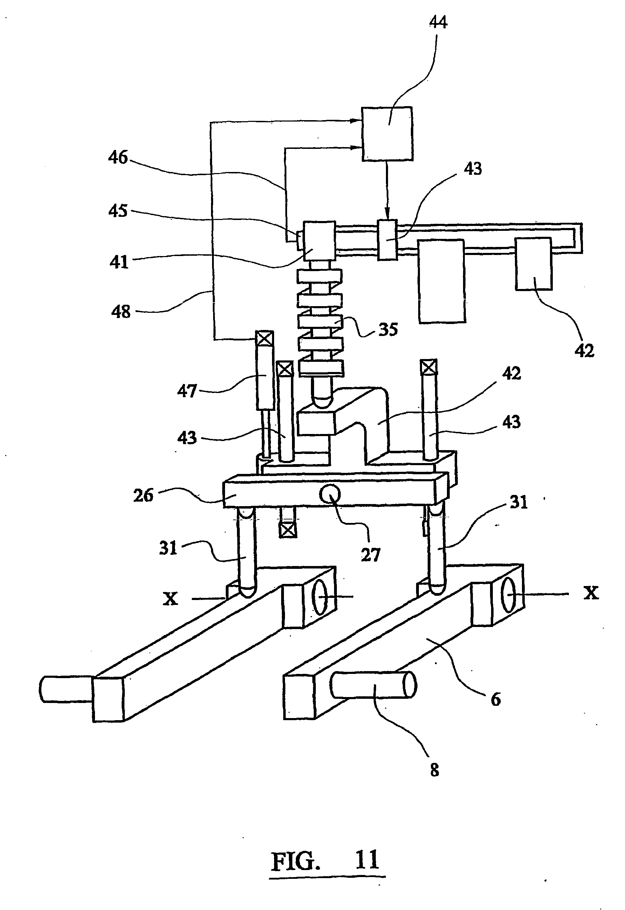

Where, however, it is essential that the wheel movements and damping characteristics in the **b** type situation should be as close as possible to those in the **c** type situation, the arrangement shown in Figs. 10 and 11 may be used. In this arrangement, a hydraulic ram 41 is interposed between the spring unit 35 and the vehicle frame. The pivot 27 of the balance beam 26 is carried by a cross-head 42 which is slidable on one or a pair of guide rods 43 secured to the vehicle. The ram 41 is supplied with hydraulic fluid by a pump 42 and a valve 43 which is under the control of a processor 44, a sensor 45 measures the extension of the ram 41 and supplies a corresponding signal to the processor 44 along the line 46. A further linear sensor 47 determines the position of the cross-head 42 and thus of the pivot 27 and delivers a corresponding signal to the processor 44 along a line 48.

The processor 44 determines the acceleration of the pivot point 27 by analysis of the output signal from the sensor 47 and thus can cause the ram 41 to be extended in the event of detention of a b type situation. The inventor acknowledges the help given by Dr. Y. H. Au and Dr. S. Sivaloganathan of Brunel University in verifying the feasibility of this arrangement.

The incorporation of the hydraulic ram 41 has other advantages. It can be used to ensure a constant ride height of the vehicle despite variations in the load being carried. By the provision of a suitable rider-operated control, the rider can raise the ride height when traversing rough terrain. The rider may reduce the ride height when travelling in slippery conditions. The ride height may be automatically reduced when the suspension locking brake is engaged. This could be modified in accordance with the angle of lean of the vehicle as determined by appropriate sensors such as a rotary sensor measuring the angle between the two suspension arms 6 or between the beam 26 and the cross-head 42.

At very low speeds, the processor could be programmed to lower the vehicle's ride height automatically to increase low speed stability and also for parking. When parked, the stabilising brake as well as one or more road wheel brakes would be engaged by a handbrake. In severe emergency, for example, when all wheels have lost grip and the vehicle is about to collide with something, a manual command could quickly lower the vehicle sufficiently to bring a large friction pad on the underside of the vehicle into contact with the ground to give a greater area of frictional contact than that provided by the tyres and thereby help to decelerate the vehicle. The vehicle could also rest on the pad when parked. The pad may be pivotally connected to the vehicle about a longitudinal axis, with centring springs.

In the preferred form of vehicle which has a pair of front wheels and a pair of rear wheels, the rams of the front and rear suspensions could be coordinated to help keep the vehicle level over uneven ground thus, where the front linear sensor 47 detects an upward movement of its associated pivot point 27, the rear ram could be instructed to extend correspondingly.

The resilient and damped suspension units 25 in Fig. 4 and 8 and 35 in Figs. 9-11, may be of any appropriate type whether resilience is supplied either by a spring or a compressed gas.

In the suspensions discussed so far, the suspension units have been shown acting at right angles to the swing arm 6 and thus vertical in the drawings. However, by connecting them to integral lugs or projections on the swing arms, they may be placed substantially horizontally (or an any other desired angle) with corresponding space saving and lowering of the centre of gravity of the vehicle.

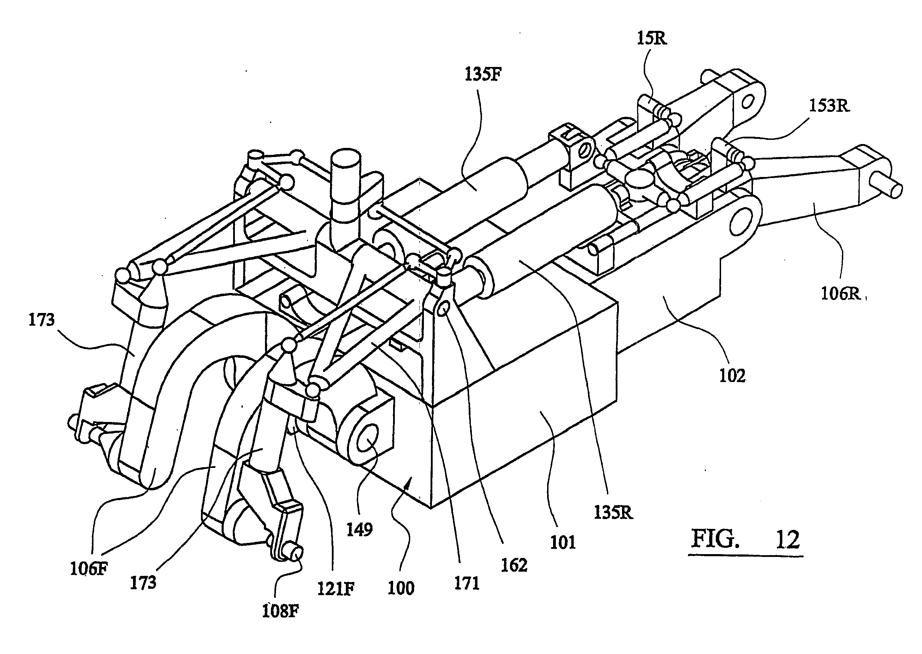

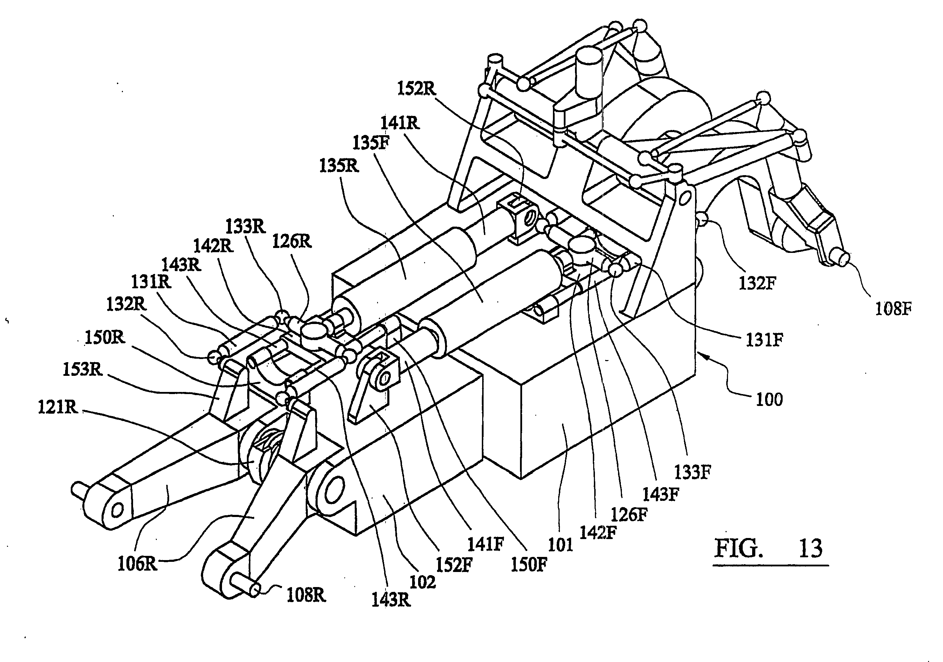

Figs. 12 and 13 are perspective views from the front and rear respectively of the chassis and suspensions of a four-wheel motorcycle-type vehicle, incorporating suspensions of the kind shown in Figs. 10 and 11, for the front and rear wheels. Parts corresponding to those shown in Figs. 10 and 11 are indicated by the same preference numerals increased by 100 and with the suffix F for the front suspension and R for the rear suspension.

The chassis shown in Figs. 12 and 13 has a mainframe 100 defining a location 101 for a prime move such as an internal combustion engine and a housing 102 for a transmission which may include a mechanical gearbox or a generator. The rear, trailing suspension arms 106R are each independently pivoted at their front ends to the rear of the frame 100. The suspension arms 106F at the front of the vehicle are of an inverted U or J shape and are each independently pivoted to the front of the frame 100 again about a common transverse axis as leading suspension arms. Suspension locking brakes 121F and 121R enable the suspension arms 106F and 106R to be locked to each other and/or to the frame in an emergency. Each of the front swing arms 106F has a short lateral extension connected by the ball joint 132F to the connecting link 131F which is connected at its other end by the ball joint 133F to an arm of the beam 126F which is pivotally mounted on the cross-head 142F. The cross-head 142F is slidable along parallel guide rods 143F which have their ends secured in brackets 150F secured to the frame 100 at each end.

One end of the front resilient suspension unit 135F is secured to the cross-head 142F while its other, rear end is connected by the ram 141F and a device to an upstanding lug 152F to a portion of the frame 100.

Each of the rear swing arms 106R carries an upstanding lug 153R which are connected by the ball joints 132R, constant length links 131R and ball joints 133R to the opposite ends of the rear suspension beam 126R which is pivoted again about a vertical axis on the rear cross-head 142R. The guide rods 143R for the cross-hcad 142R are fixed at each end in brackets 150R. The rear end of the rear suspension unit 135R is secured to the cross-head 142R while the rear ram 141R interconnects the front of the rear unit 135R with an upstanding lug 152R on the frame 100.

It will be noted that the two suspension units 135F and 135R are side by side and offset from the centre line of the vehicle to produce a compact arrangement with a low centre of gravity.

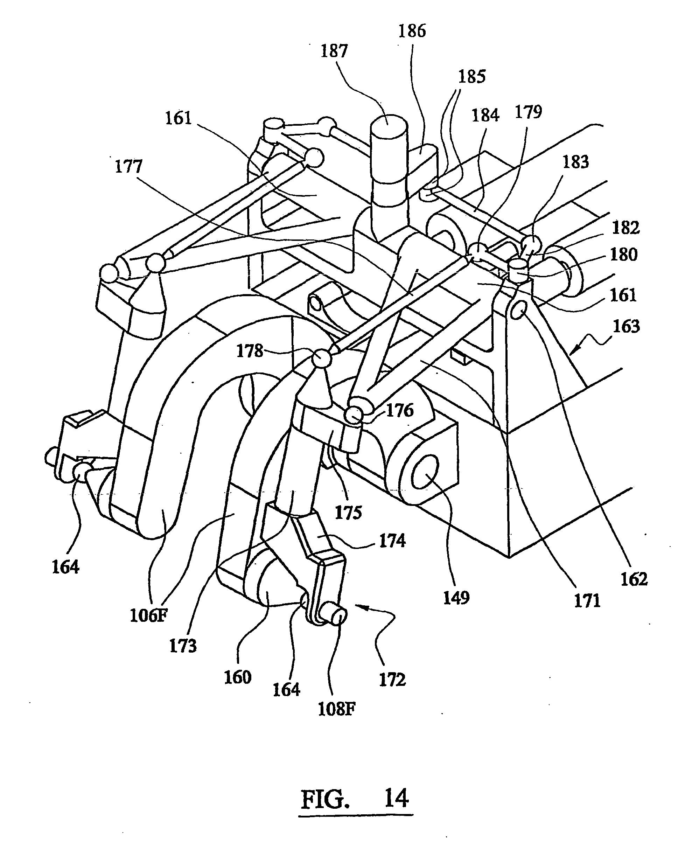

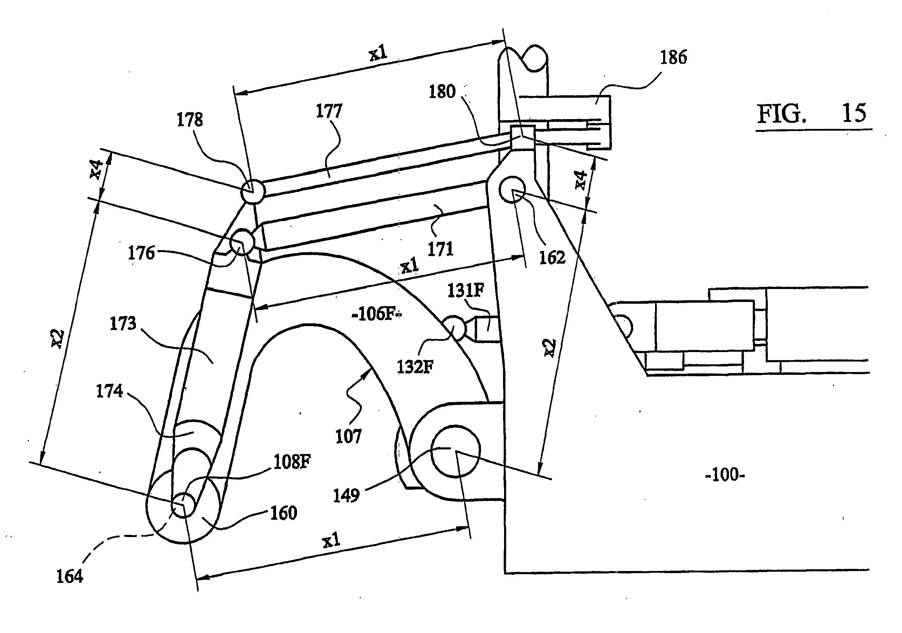

At the front end, the frame has an upstanding bridge portion extending over the front connecting links 131F to form a support for the steering linkage which is shown on an enlarged scale in Figs. 14 and 15.

In Fig. 14, an Ackermann-type linkage is located above an upper wishbone member 171 and a stub axle assembly 172 is formed integrally with a vertical strut 173. At its free end, the swing arm 106F carries a bracket 160 on which the lower end of the stub axle assembly 172 is articulated by means of a ball joint 164. The centre of the ball joint 164 lies in the central plane of the tyre (not seen), thereby providing wheel centre steering. Above the stub axle assembly 172, the strut 173 is offset at 174. Near its upper end, the strut 173 carries an arm 175. The arm 175 is articulated to the leading end of the wishbone member 171 by means of a ball joint 176. The rear, base portions 161 of the wishbone members are pivotally mounted on cross-shafts 162 in the bridge portion 163. A drag link 177 is articulated to the upper end of the strut 173 by means of a ball joint 178. At its rear end, the drag link 177 is articulated by a ball joint 179 to one arm of a bell-crank lever 180 which is pivotally mounted on the bridge at 180 and has its other arm 182 articulated at 183 to the outer end of a track rod 184. The inner end of each track rod 184 pivots at 185 to an arm 186 on the stem 187 of the handle bars 2 (Fig. 1), (or a steering wheel) thereby forming an Ackermann steering linkage.

The distance X₁ between the pivotal axis 149 of the front swing arms 106F and that of the ball joint 164 is equal to the distance between the axis 162 and the ball joint 176. Further, the distance X₂ between the ball joint 176 and the ball joint 164 is equal to the distance between the axis 162 and the axis 149. Accordingly, the axes represented by 162, 149, 164 and 176 form a first parallelogram. A second parallelogram (X₁, X₄) is effectively formed by the axes of 176, 178, 179 and 162. As a result, the Ackermann-type steering developed by the members 184 and 182 is transmitted to the front road wheels by these two parallelogram linkages which also provide constant trail for the suspension irrespective of up and down movements of the wheel and without deflecting the handlebars. The arrangement is also suitable for a single front wheel vehicle.

The inverted U or J shape of the front swing arms 106 permits the rear portions of the front wheels to turn without obstruction under the underside of the rear limb 107 of the swing arm.

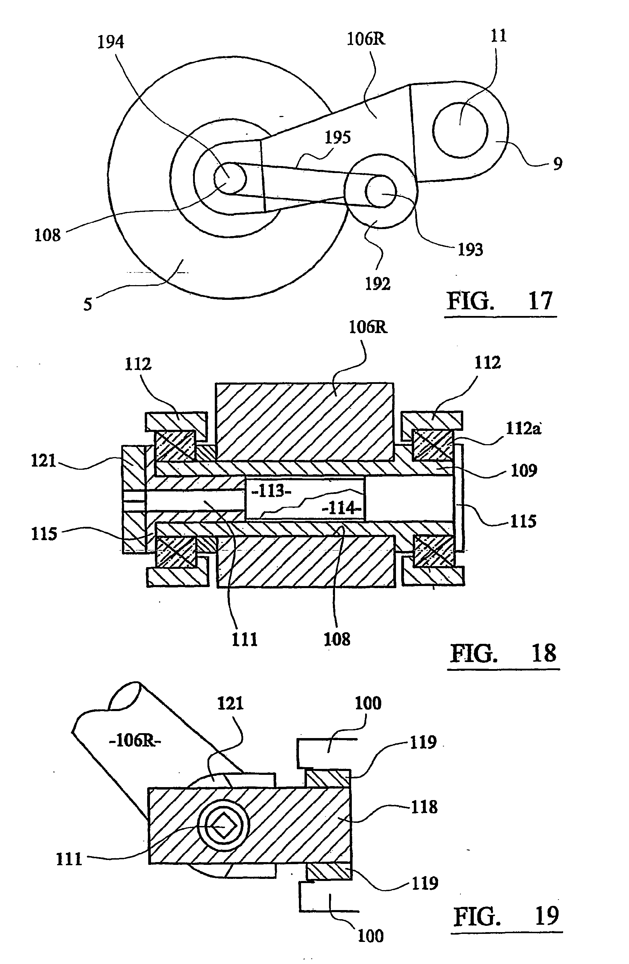

As shown in Fig. 18, each rear, trailing suspension arm 106R, which may be an aluminium alloy forging, has a bore 108 in which a steel sleeve 109 is fixedly secured. The two ends of the sleeve 109 are supported in lugs 112 carried by the vehicle body by means of appropriate bearings 112a, which may for example be double row roller or ball bearings. Within the sleeve 109 is a shaft 111 supported in end caps 115 fixed in the internal bore of the sleeve 109 by screw threads. The shaft 111 projects from one of the end caps 115 to carry one element 121 such as the brake sector, of the suspension stabilising brake.

Where residual resilient movement is required between the shaft 111 and the sleeve 109, the shaft 111 has projections 113 interposed with clearance between internal projections 114 on the interior of the bore. As in the case of Fig. 7, resilient buffer elements, for example of rubber, are inserted in the spaces between the projections 113 and 114. Where such resilient residual movement is not required, the projections 113 and 114 are made sufficiently large to avoid any clearance and may in fact be replaced by a splined connection between the shaft 111 and the sleeve 109.

With this construction, a variety of different types of residual resilient suspension can be obtained when the suspension stabilising brake is engaged. Such resilient residual suspension is desirable to avoid the tendency of the vehicle to bounce and lose stability.

The following variations can be achieved:-
1. Residual suspension for **b** type situations with full suspension for c type situations. Here, the brake would interconnect the two suspension arms of each suspension with the interposition of the resilient elements between the projections 113 and 114.
2. Zero suspension movement for b type situations with full suspension movement for c type situations. Here, the resilient elements would be omitted so that the shaft 111 is effectively solid with the sleeve 109 for each suspension arm.
3. Residual suspension movement for both **b** and **c** type situations. Here, the other portion of each suspension brake, typically the caliper, is rigidly mounted on the chassis or other sprung part of the vehicle and resilient elements are included between the projections 113'and 114.
4. If the resilient residual suspension provided by the vehicle tyres is considered sufficient, the stabilising brakes may be arranged to effectively lock each suspension arm to the chassis without the interposition of the resilient elements.
5. Zero suspension movement for **b** type situations with residual suspension movements for **c** type situations. This would be achieved by omitting the resilient elements, thereby locking the two suspension arms of each pair to each other but mounting the brake assembly to a member 118 (Fig. 19) which can make small angular movements about the shafts 111 under the constraint of resilient blocks 119 engaged between it and the elements of the chassis 100.

If it is not feasible to insert the brake to act between the two arms of the pair, with or without residual resilience, the construction shown in Fig. 18 may be used between the balance beam and the cross-head. This situation may occur where a differential unit is required in the position shown for the brake 121R in Fig. 13. Where zero suspension movement for b type situations and residual suspension movement for c type situations is required, an electrically-stiffened suspension damper would be used which is automatically activated when the suspension brake is engaged.

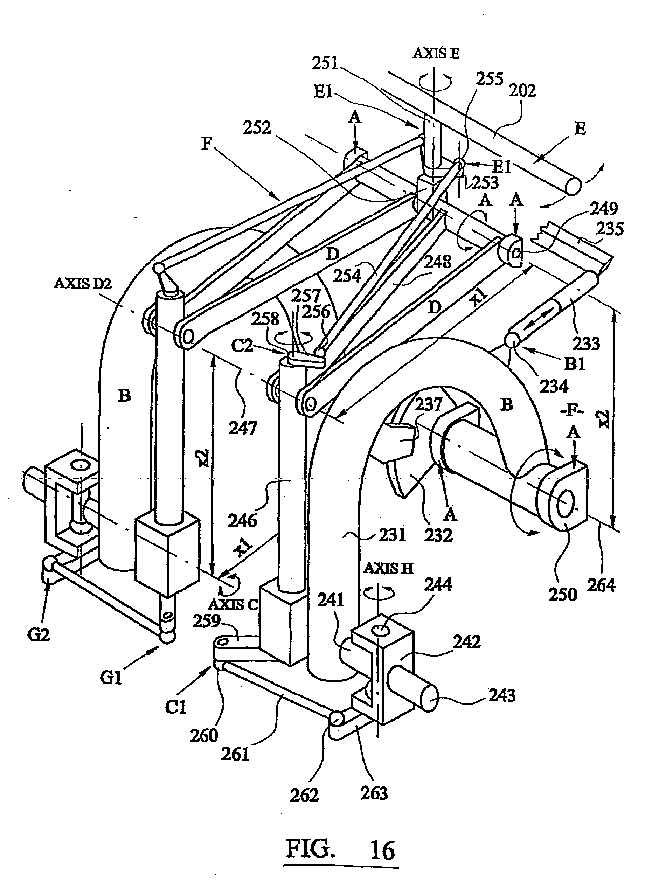

As shown in Fig. 16, the front suspension has a swing arm 231 for each front wheel. Each swing arm 231 is of inverted J shape having its shorter limb pivotally mounted on the frame F by the arrangement shown in Fig. 7 and connected, by the lost motion arrangement shown in Fig. 7 to a further brake sector 232. Approximately horizontal suspension struts 233 are articulated to the swing arms 231 at 234 at one end and to a beam 235 at the other end. The beam 235 is pivotally mounted on the frame in the manner of the beam 26 of the rear suspension but in this case the pivotal axis is approximately vertical.

As in the case of the rear suspension, the brake discs 232 can be arrested by a brake caliper 237 secured to the frame.

At the lower front end of each swing arm 231 is pivotally mounted a cross shaft 241 carrying at one end, a stub axle assembly 242 with an axle 243 for the front wheel (not shown). The stub axle assembly 242 can turn on the shaft 241 by means of a king pin 244.

The shaft 241 extends inwardly of the vehicle beyond the inner face of the swing arm 231 and is secured in a block 245 at the lower end of a tubular strut 246. Near its upper end, the strut 246 is pivoted about a transverse axis 247 to the front end of a wishbone member 248, the rear end of which is pivotally mounted on a shaft 249 carried in lugs 250 secured to the frame F.

The handlebars 202 are carried on an upwardly extending shaft 251 which is supported in a bearing assembly 252 secured to the frame F. A shaft 251 carries short lever arms 253. Upper steering rods 254 are articulated at one end 255 to the lever 253 and at their forward ends at 256 to crank levers 257 which are of the same effective length as the levers 253.

The crank levers 257 are mounted on the upper ends of steering shafts 258 extending downwards through the struts 246 to terminate in lower crank arms 259 to which are articulated at 260 lower steering rods 261 articulated at their other ends 262 to steering lever 263 secured to the stub axle assemblies 242.

The distance between the axis of each shaft 241 and the pivotal axis 264 of the swing arm 231 is equal to the distance between the axis 247 and the axis of the shaft 249. Further, the distance between the axis of the shaft 249 and pivotal axis 264 of the swing arm is equal to the distance between the axis 247 and the axis of the shaft 241, thereby resulting in a parallelogram linkage maintaining the strut 46 parallel to a particular axis of the frame. By making the arms 259 and 263 of appropriately unequal length, an Ackermann-type steering is obtained.

By using linear guiding for the pivot point of the balance beam as shown in Figs. 12-14, the variations in the effect of the spring rate and damping can be reduced. During movements of the suspension mechanism, the connecting links and swing arms in a **b** type situation, the force exerted by the suspension unit is not equally divided between the suspension arms, although the difference is likely to be small or negligible. Nevertheless, by repositioning the two balance beam ends above or below the pivot point axis, and/or by arranging the point of application of the suspension unit on a short projection on the beam, the force exerted by the suspension unit on the pivot point through the cross-head can be biased towards either suspension arm in a **b** type situation. This could also be used to counter the momentum of the suspension arm during a **b** type encounter, thereby improving stability.

Locating the suspension brakes on the pivotal axes of the swing arms reduces the unsprung weight and keeps the centre of gravity of the vehicle low. The links connecting the swing arms may be arranged to be in tension rather than compression, for example, by mounting the lugs 153 on the underside of their swing arms.

Fig. 17 shows an arrangement for driving one of the rear wheels. The front portion of the rear trailing suspension arm 106 forms a mounting for a hydraulic or electric motor 192 which drives a toothed pulley 193. A further toothed pulley 194 mounted on the axle 108 at the rear end of the suspension arm 106 is secured to the rear wheel. A toothed belt 195 extends around the pulleys 193 and 194 so that the motor 192 drives the rear wheel. The pulleys 193 and 194 and belt 195 could of course be replaced by a convention chain and sprocket drive.

The two motors 192 are mounted near the axis 7 and so do not greatly increase the unsprung mass of the rear suspension. The motors 192, if hydraulic are supplied by a common swash-plate pump, or if electric by a generator, driven by an internal combustion engine. The drive is shared between the two motors in such a manner that they form a differential drive. The effective gear ratio between the engine and the rear wheels can be varied by varying the angle of the pump swash-plate or generator output. This may be controlled automatically in response to the torque encountered by each wheel and the road speed. As a result of using this transmission or other automatic transmission, the need for a hand operated clutch control on the left-hand handle bar is avoided. This control may be replaced by a manual control for the stabilising brakes. This control may be similar to the brake lever 88 (fig. 1) for controlling the front road wheel brakes.

In an alternative transmission, the rear wheels each incorporate an electric motor which is supplied by a common generator driven by the prime mover. Moreover, if desired, the front wheels may instead, or additionally, incorporate electric motors supplied by the generator.

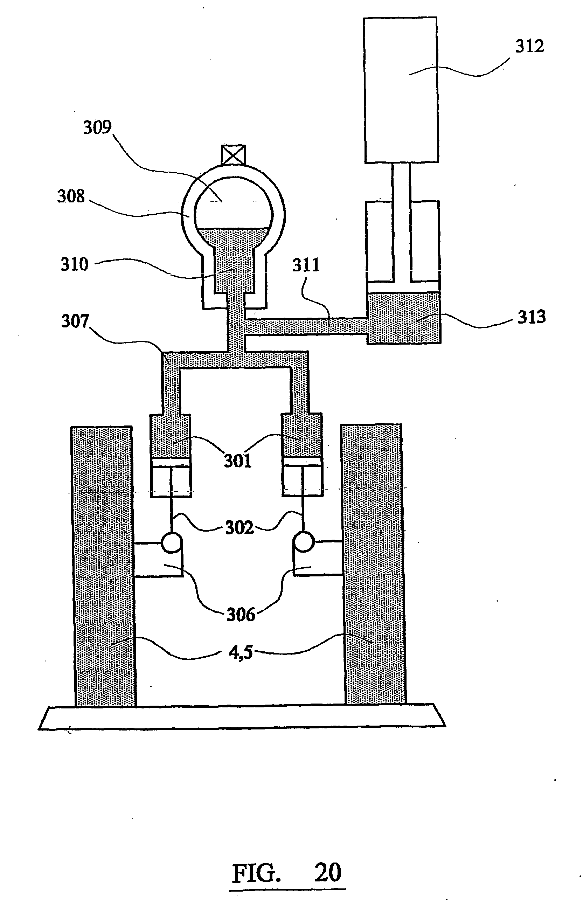

In the modified suspension arrangement shown diagrammatically in Fig. 20, a hydraulic suspension unit 301 is connected by a respective link 302 to the suspension swing arm 306 for the respective wheel. The hydraulic chambers of the two hydraulic suspension units 301 are connected together by a line 307 which is also connected to the hydraulic oil chamber of an oleo pneumatic accumulator 308 in which a body of compressed gas 309 pressurises a body of oil 310 and thereby the oil in the two suspension units 301.

In the event of detection of a **b** situation, additional oil can be fed into the system through a line 311 supplied either directly from a system of the kind shown in Fig. 11 or by the use of a ram 312 to displace oil from a chamber 313.

Because the vehicle's components are mounted as low as practically possible to give the vehicle a low centre of gravity, perhaps with the fuel tank between the back wheels, a useful space is created on top of the main components either side of the seat post. These spaces could have racks on them for tying down transported items or for permanent or removable containers. If removable, the containers could have their own wheels and extendable handle for easy transportation to and from the vehicle as shown in the following diagram. Alternatively, the seat post could be mounted to one side or from the front or back of the vehicle to give an interrupted load space.

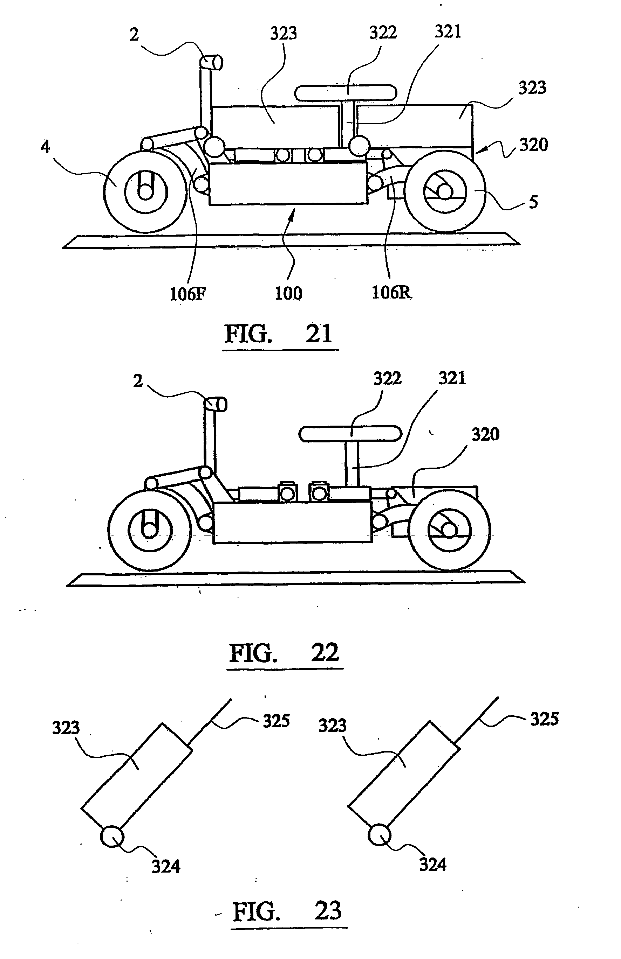

Thus, Figs. 21 and 22 are side views of a vehicle of the kind shown in Figs. 12 to 14. The vehicle has a fuel tank 320 mounted between the rear, trailing suspensions arms 106R which, as shown here can be of curved shape. An upstanding post 321 extends upwards from the body structure 100 between the suspension units 135F and 135R (Figs. 12 and 13) to carry a suitable seat or saddle 322. As can be seen from Fig. 22, a low centre of gravity is achieved. This enables containers for goods such as those shown at 323 to be carried one between the post 321 and the handlebars 2 and the other behind the post 321 as shown in Fig. 21. Conveniently, the containers 323 have a pair of small wheels 324 and a retractable handle 325. In the vehicle shown in Figs. 12 to 14, the stabilising brake arrangement shown in Fig. 7 may be used for each of the suspension arms. When the stabilising brakes are engaged, limited residual suspension movement remains available in response to both **b** and **c** type situations. If no residual resilient suspension is required in response to **b** type situations when the stabilising brakes are applied, the stabilising brakes would be arranged to act directly on the suspension arms without the interposition of any resilient elements. If residual resilience is required in such a case in response to **c** type situations, the brakes could be resiliently mounted to the vehicle.

In operation, the vehicle described above can be ridden under normal conditions like a conventional motor bicycle as shown in figs. 2 and 3. The maximum angle of tilt, however, allowed by the suspension need only be about 30° to accommodate cornering forces which would require a conventional two-wheel motorcycle to lean at an angle of 45°.

If the rider senses that the vehicle is losing control, the rider can engage the stabilising brakes to prevent further tilting of the vehicle (other than the relatively small residual angular movement where allowed by the lost-motion device such as shown in fig. 7). This control arrangement may be augmented by sensing means (for example an accelerometer arranged to detect abnormal lateral acceleration) for detecting incipient instability and reacting more quickly than the rider to apply the stabilising brakes. The rider then assumes manual control of the stabilising brakes and releases them when the dangerous condition has passed.

The invention is further described with reference to the following numbered claims.

## Claims

1. Suspension and steering system for a motorcycle-type vehicle having a pair of front wheels (4), the system comprising:
a suspension system comprising:
a swing arm (231) for its respective wheel (4), each swing arm (231) being pivotally mounted at one end for angular movement about a first transverse axis (264) of the vehicle, a stub axle assembly (242) supporting the other end of the swing arm (231) on its respective wheel (4);
each wheel (4) of the pair, or the pair of wheels (4), being connected to the body structure (100) through a suspension having a first end linked to the associated wheel (4) and a second end, the second ends being interconnected by connecting means constraining equal and opposite movements of the said opposite ends relative to the body structure (100) and a steering system comprising: and
a parallelogram-type linkage formed by the swing arm (231), an upper arm (248) pivotally mounted at a rear end for angular movement about a second transverse axis (249) of the vehicle, spaced above the first transverse axis (264) and a strut (246) articulated at its upper end to the upper arm (248) and at its lower end to the other end of the swing arm (231),
handlebars (202) to steer the front wheels (4);
upper and lower steering rod systems (254, 261) for interconnecting the handlebars (202) with each stub axle assembly (242), the upper and lower rod systems (254, 261) being interconnected for the transmissions of torque therebetween along the length direction of the struts (246).

2. A suspension and steering system according to claim 1, wherein each swing arm (231) has a pivotally mounted cross shaft (241) carrying at one end the associated stub axle assembly (242) with an axle (243) for the associated front wheel (4), the cross shaft (241) extending inwardly of the vehicle beyond the inner face of the associated swing arm (231) and is secured to the lower end of the associated strut (246).

3. A suspension and steering system according to claim 2, wherein each stub axle assembly (242) can turn by means of a kingpin.

4. A suspension and steering system according to any of the preceding claims, wherein the connections between the handlebars (202) and each stub axle assembly (242) form an Ackermann-type steering geometry.

5. A suspension and steering system according to any of the preceding claims wherein each swing arm (231) is of inverted U or J shape.

6. A suspension and steering system according to any of the preceding claims further comprising a steering control member.

7. A suspension and steering system according to any of the preceding claims, wherein each swing arm (231) is articulated to the lower end of a conventional suspension strut (25), the upper ends of the two suspension struts (25) being articulated to the opposite ends of a beam (26) which is pivoted at its mid point (27) on a shaft carried by the frame (100), the opposite ends of each suspension strut (25) defining each first and second end.

8. A suspension and steering system according to any of the claims 1 to 6, further comprising a connecting beam (26) pivoted to a linearly guided member (34) at its mid-point (27) and further articulated by constant length links (31) to the swing arms (231) supported on a respective wheel (4) of the vehicle, and a resilient suspension unit (35) acting between the body structure (100) and the linearly-guided member (34), the opposite ends of each constant length link (31) defining each first and second end.

9. A suspension and steering system according to claims 7 and 8, wherein the beam's (26) pivotal axis (27) is offset from a theoretical line intersecting the articulations at the beam's ends.

10. A suspension and steering system according to any of the claims 1 to 6 further comprising a hydraulic suspension unit (301) connected by a respective link (302) first end to each swing arm (231), and the hydraulic chambers second end of the two units (301) interconnected by a line (307) which is also connected to the hydraulic oil chamber of an oleo-type pneumatic accumulator (308) in which a body of compressed gas (309) pressurises a body of oil (310) and thereby the oil in the chambers of the suspension units (301).

11. A suspension and steering system according to any of the preceding claims wherein the first ends are connected to integral lugs or projections on the swing arms (231)

12. A suspension and steering system according to any of the claims 1 to 10 wherein the first ends are connected to lugs or projections mounted on the underside of their swing arms (231).

13. A suspension and steering system according to any of the preceding claims wherein the suspension units act vertically, horizontally, or at any other desired angle.

14. A suspension and steering system according to any of the preceding claims wherein the links connecting the swing arms (231) are arranged to be in tension rather than compression.

15. A suspension and steering system according to any of the preceding claims further comprising a stabilizing braking means operable to arrest movements of the said first ends of the suspension relative to the body structure in the event of excessive lateral acceleration of the vehicle associated with insipient instability, a rider-operated control for engaging the stabilizing braking means, where the control arrangement may be augmented by sensing means for detecting incipient instability and reacting more quickly than the rider to apply the stabilizing brakes by automatic means, operation of the rider-operated control after operation of the automatic means cause deactivation of the automatic means.

16. A suspension and steering system according to claims 1-15 wherein the stabilizing braking means of claim 15 acts between the balance beam (126F) and cross head (142F) to arrest movements of the said first ends in relation to the body structure (100).

17. A suspension and steering system according to claim 15 and 16 wherein limited movement is allowed in the path between each wheel (4) and the body structure (100) in the engaged state of the stabilizing means to provide a limited range of suspension.

18. A motorcycle type vehicle provided with a suspension and steering system according to any of the preceding claims having a pair of rear wheels (5) mounted on the end of respective swing arms (106R) which are each independently pivotally mounted at their forwards ends on the frame (100) for pivotal movement about the same transverse axis (7) which is horizontal when the vehicle is upright, the swing arms (106R) having a suspension according to any of the claims 1, 7 to 17.

19. A motorcycle type vehicle provided with a suspension and steering system according to any of the preceding claims having a differential drive unit.

20. A motorcycle type vehicle provided with a suspension and steering system according to any of the preceding claims where the spacing between the paired wheel is sufficiently small to allow them to lie within the overall envelope of the vehicle.

## Patentansprüche

1. Federungs- und Lenksystem für ein motorradartiges Fahrzeug mit einem Paar Vorderrädern (4), wobei das System Folgendes umfasst:
ein Federungssystem, das Folgendes umfasst:
einen Schwingarm (231) für sein jeweiliges Rad (4), wobei jeder Schwingarm (231) an einem Ende für die Winkelbewegung um eine erste Querachse (264) des Fahrzeugs drehbar montiert ist; eine Achsschenkelbaugruppe (242), die das andere Ende des Schwingarms (231) auf seinem jeweiligen Rad (4) trägt; wobei jedes Rad (4) des Paars, oder das Paar Räder (4), durch eine Federung mit einem an das zugehörige Rad (4) gekoppelten ersten Ende und einem zweiten Ende mit der Karosseriestruktur (100) verbunden ist, wobei die zweiten Enden durch Verbindungsmittel miteinander verbunden sind, die gleiche und entgegengesetzte Bewegungen der gegenüberliegenden Enden relativ zu der Karosseriestruktur (100) einschränken und ein Lenksystem, das Folgendes umfasst:
ein parallelogrammartiges Gestänge, das von dem Schwingarm (231), einem zur Winkelbewegung um eine über der ersten Querachse (264) beabstandete zweite Querachse (249) des Fahrzeugs an einem hinteren Ende drehbar montierten oberen Arm (248) und einer an ihrem oberen Ende gelenkig an dem oberen Arm (248) und an ihrem unteren Ende an dem anderen Ende des Schwingarms (231) angebrachten Strebe (246) gebildet wird;
einen Lenker (202) zum Lenken der Vorderräder (4);
ein oberes und ein unteres Lenkstangensystem (254, 261) zum Verbinden des Lenkers (202) mit jeder Achsschenkelbaugruppe (242), wobei das obere und das untere Stangensystem (254, 261) zur Übertragung von Drehmoment zwischen ihnen entlang der Längsrichtung der Streben (246) miteinander verbunden sind.

2. Federungs- und Lenksystem nach Anspruch 1, wobei jeder Schwingarm (231) eine drehbar montierte Querwelle (241) aufweist, die an einem Ende die zugehörige Achsschenkelbaugruppe (242) mit einer Achse (243) für das zugehörige Vorderrad (4) trägt, wobei sich die Querwelle (241) über die Innenfläche des zugehörigen Schwingarms (231) hinaus in dem Fahrzeug nach innen erstreckt und an dem unteren Ende der zugehörigen Strebe (246) befestigt ist.

3. Federungs- und Lenksystem nach Anspruch 2, wobei jede Achsschenkelbaugruppe (242) mittels eines Achszapfens rotieren kann.

4. Federungs- und Lenksystem nach einem der vorangehenden Ansprüche, wobei die Verbindungen zwischen dem Lenker (202) und jeder Achsschenkelbaugruppe (242) eine Ackermann-Lenkgeometrie bilden.

5. Federungs- und Lenksystem nach einem der vorangehenden Ansprüche, wobei jeder Schwingarm (231) jeweils eine umgekehrte U- oder J-Form aufweist.

6. Federungs- und Lenksystem nach einem der vorangehenden Ansprüche, weiter umfassend ein Lenksteuerungselement.

7. Federungs- und Lenksystem nach einem der vorangehenden Ansprüche, wobei jeder Schwingarm (231) gelenkig am unteren Ende eines herkömmlichen Federbeins (25) angebracht ist, wobei die oberen Enden der zwei Federbeine (25) gelenkig an den gegenüberliegenden Enden eines Trägers (26) angebracht sind, der an seinem Mittelpunkt (27) auf einer von dem Rahmen (100) getragenen Welle dreht, wobei die gegenüberliegenden Enden jedes Federbeins (25) jedes erste und jedes zweite Ende definieren.

8. Federungs- und Lenksystem nach einem der Ansprüche 1 bis 6, weiter umfassend einen Verbindungsträger (26), der an seinem Mittelpunkt (27) drehbar mit einem linear geführten Element (34) verbunden ist und weiter durch Verbindungsglieder (31) mit konstanter Länge gelenkig an dem auf einem jeweiligen Rad (4) des Fahrzeugs getragenen Schwingarm (231) angebracht ist, und eine elastische Federungseinheit (35), die zwischen der Karosseriestruktur (100) und dem linear geführten Element (34) wirkt, wobei die gegenüberliegenden Enden der Verbindungsglieder (31) mit konstanter Länge jeweils jedes erste und jedes zweite Ende definieren.

9. Federungs- und Lenksystem nach Ansprüchen 7 und 8, wobei die Drehachse (27) des Trägers (26) von einer die Gelenke an den Enden des Trägers schneidenden theoretischen Linie versetzt ist.

10. Federungs- und Lenksystem nach einem der Ansprüche 1 bis 6, weiter umfassend eine hydraulische Federungseinheit (301), die durch ein jeweiliges erstes Verbindungsgliedende (302) mit jedem Schwingarm (231) verbunden ist und wobei die zweiten Hydraulikkammerenden der zwei Einheiten (301) durch eine Leitung (307) miteinander verbunden sind, die außerdem mit der Hydraulikölkammer eines Öl-Pneumatikspeichers (308) verbunden sind, in dem eine Menge an verdichtetem Gas (309) eine Menge an Öl (310) und dadurch das Öl in den Kammern der Federungseinheiten (301) unter Druck setzt.

11. Federungs- und Lenksystem nach einem der vorangehenden Ansprüche, wobei die ersten Enden mit integrierten Ansätzen oder Vorsprüngen an den Schwingarmen (231) verbunden sind.

12. Federungs- und Lenksystem nach einem der Ansprüche 1 bis 10, wobei die ersten Enden mit Ansätzen oder Vorsprüngen verbunden sind, die an der Unterseite ihrer Schwingarme (231) montiert sind.

13. Federungs- und Lenksystem nach einem der vorangehenden Ansprüche, wobei die Federungseinheiten vertikal, horizontal oder unter einem beliebigen anderen gewünschten Winkel wirken.

14. Federungs- und Lenksystem nach einem der vorangehenden Ansprüche, wobei die die Schwingarme (231) verbindenden Verbindungsglieder dazu angeordnet sind, unter Zug statt unter Druck zu stehen.

15. Federungs- und Lenksystem nach einem der vorangehenden Ansprüche, weiter umfassend ein stabilisierendes Bremsmittel, das betriebsfähig ist, Bewegungen der genannten ersten Enden der Federung relativ zu der Karosseriestruktur im Fall mit einsetzender Instabilität zusammenhängender übermäßiger seitlicher Beschleunigung des Fahrzeugs aufzuhalten, ein fahrerbetätigtes Steuerelement zum Einrücken des stabilisierenden Bremsmittels, wobei die Steuereinrichtung durch Abfühlmittel zum Erkennen von einsetzender Instabilität verbessert werden kann und schneller reagiert als der Fahrer, um die stabilisierenden Bremsen durch automatische Mittel anzulegen, wobei die Betätigung des fahrerbetätigten Steuerelements nach Betätigung des automatischen Mittels die Deaktivierung des automatischen Mittels bewirkt.

16. Federungs- und Lenksystem nach Ansprüchen 1-15, wobei das stabilisierende Bremsmittel nach Anspruch 15 zwischen dem Ausgleichsträger (126F) und der Traverse (142F) wirkt, um Bewegungen der ersten Enden in Bezug auf die Karosseriestruktur (100) aufzuhalten.

17. Federungs- und Lenksystem nach Anspruch 15 und 16, wobei im eingerückten Zustand des Stabilisierungsmittels begrenzte Bewegung in der Bahn zwischen jedem Rad (4) und der Karosseriestruktur (100) zugelassen ist, um einen begrenzten Federungsbereich vorzusehen.

18. Motorradartiges Fahrzeug, das mit einem Federungs- und Lenksystem nach einem der vorangehenden Ansprüche versehen ist, mit einem Paar Hinterrädern (5), die am Ende jeweiliger Schwingarme (106R) montiert sind, die jeweils zur drehenden Bewegung um dieselbe, bei aufrechtem Fahrzeug horizontale Querachse (7) an ihren vorderen Enden unabhängig drehbar an dem Rahmen (100) montiert sind, wobei die Schwingarme (106R) eine Federung nach einem der Ansprüche 1, 7 bis 17 aufweisen.

19. Motorradartiges Fahrzeug, das mit einem Federungs- und Lenksystem nach einem der vorangehenden Ansprüche versehen ist und eine Differentialantriebseinheit aufweist.

20. Motorradartiges Fahrzeug, das mit einem Federungs- und Lenksystem nach einem der vorangehenden Ansprüche versehen ist, wobei der Abstand zwischen den gepaarten Rädern ausreichend klein ist, um zuzulassen, dass sie innerhalb der Gesamthüllkurve des Fahrzeugs liegen.

## Revendications

1. Système de suspension et de direction pour un véhicule de type motocycle ayant une paire de roues avant (4), le système comportant :
un système de suspension comportant :
un bras pivotant (231) pour sa roue respective (4), chaque bras pivotant (231) étant monté de façon à pouvoir pivoter au niveau d'une extrémité pour un déplacement angulaire sur un premier axe transversal (264) du véhicule ; un assemblage de demi-essieu (242) soutenant l'autre extrémité du bras pivotant (231) sur sa roue respective (4) ;
chaque roue (4) de la paire, ou la paire de roues (4), étant connectée à la structure de carrosserie (100) par le biais d'une suspension ayant une première extrémité liée à la roue associée (4) et une deuxième extrémité, les deuxièmes extrémités étant interconnectées par un moyen de connexion contraignant lesdites extrémités opposées à des déplacements égaux et
opposés relativement à la structure de carrosserie (100) et un système de direction comportant :
une transmission de type parallélogramme formée par le bras pivotant (231), un bras supérieur (248) monté de façon à pouvoir pivoter au niveau d'une extrémité arrière pour un déplacement angulaire sur un deuxième axe transversal (249) du véhicule, espacé au-dessus du premier axe transversal (264) et une jambe (246) articulée au niveau de son extrémité supérieure sur le bras supérieur (248) et au niveau de son extrémité inférieure sur l'autre extrémité du bras pivotant (231) ;
des poignées de guidon (202) pour diriger les roues avant (4) ;
des systèmes de bielles de direction supérieures et inférieures (254, 261) pour interconnecter les poignées de guidon (202) avec chaque assemblage de demi-essieu (242), les systèmes de bielles supérieures et inférieures (254, 261) étant interconnectés pour les transmissions de couple entre eux sur le sens de la longueur des jambes (246).

2. Un système de suspension et de direction selon la revendication 1, dans lequel chaque bras pivotant (231) a un arbre transversal monté de façon à pouvoir pivoter (241) portant au niveau d'une extrémité l'assemblage de demi-essieu associé (242) avec un essieu (243) pour la roue avant associée (4), l'arbre transversal (241) s'étendant vers l'intérieur du véhicule au-delà de la face interne du bras pivotant associé (231) et est assujetti à l'extrémité inférieure de la jambe associée (246).

3. Un système de suspension et de direction selon la revendication 2, dans lequel chaque assemblage de demi-essieu (242) peut tourner au moyen d'un pivot d'essieu avant.

4. Un système de suspension et de direction selon n'importe laquelle des revendications précédentes, dans lequel les connexions entre les poignées de guidon (202) et chaque assemblage de demi-essieu (242) forment une géométrie de direction de type Ackermann.

5. Un système de suspension et de direction selon n'importe laquelle des revendications précédentes dans lequel chaque bras pivotant (231) est en forme de U ou de J inversé.

6. Un système de suspension et de direction selon n'importe laquelle des revendications précédentes comportant de plus un organe de commande de direction.

7. Un système de suspension et de direction selon n'importe laquelle des revendications précédentes, dans lequel chaque bras pivotant (231) est articulé sur l'extrémité inférieure d'une jambe de suspension classique (25), les extrémités supérieures des deux jambes de suspension (25) étant articulées sur les extrémités opposées d'une poutre (26) qui pivote au niveau de son point central (27) sur un arbre porté par le cadre (100), les extrémités opposées de chaque jambe de suspension (25) définissant chaque première et deuxième extrémité.

8. Un système de suspension et de direction selon n'importe laquelle des revendications 1 à 6, comportant de plus une poutre de connexion (26) qui pivote vers un organe guidé linéairement (34) au niveau de son point central (27) et est de plus articulée par des liens de longueur constante (31) sur les bras pivotants (231) soutenus sur une roue respective (4) du véhicule, et une unité de suspension flexible (35) agissant entre la structure de carrosserie (100) et l'organe guidé linéairement (34), les extrémités opposées de chaque lien de longueur constante (31) définissant chaque première et deuxième extrémité.

9. Un système de suspension et de direction selon les revendications 7 et 8, dans lequel l'axe de pivotement (27) de la poutre (26) est décalé par rapport à une ligne théorique coupant les articulations au niveau des extrémités de la poutre.

10. Un système de suspension et de direction selon n'importe laquelle des revendications 1 à 6 comportant de plus une unité de suspension hydraulique (301) connectée par une première extrémité de lien respectif (302) à chaque bras pivotant (231), et la deuxième extrémité des chambres hydrauliques des deux unités (301) interconnectées par une ligne (307) qui est également connectée à la chambre d'huile hydraulique d'un accumulateur pneumatique de type oléopneumatique (308) dans lequel un corps de gaz comprimé (309) met sous pression un corps d'huile (310) et par conséquent l'huile dans les chambres des unités de suspension (301).

11. Un système de suspension et de direction selon n'importe laquelle des revendications précédentes dans lequel les premières extrémités sont connectées à des saillies ou des barrettes intégrales sur les bras pivotants (231).

12. Un système de suspension et de direction selon n'importe laquelle des revendications 1 à 10 dans lequel les premières extrémités sont connectées à des saillies ou des barrettes montées sur le dessous de leurs bras pivotants (231).

13. Un système de suspension et de direction selon n'importe laquelle des revendications précédentes dans lequel les unités de suspension agissent verticalement, horizontalement, ou à tout autre angle souhaité.

14. Un système de suspension et de direction selon n'importe laquelle des revendications précédentes dans lequel les liens connectant les bras pivotants (231) sont agencés pour être en tension plutôt qu'en compression.

15. Un système de suspension et de direction selon n'importe laquelle des revendications précédentes comportant de plus un moyen de freinage de stabilisation utilisable pour arrêter les déplacements desdites premières extrémités de la suspension relativement à la structure de carrosserie dans l'éventualité d'une accélération latérale excessive du véhicule associée à un début d'instabilité, une commande actionnée par le motocycliste pour mettre en prise le moyen de freinage de stabilisation, où l'agencement de commande peut être complété par un moyen de détection pour détecter un début d'instabilité et réagir plus rapidement que le motocycliste pour appliquer les freins de stabilisation par un moyen automatique, l'actionnement de la commande actionnée par le motocycliste après actionnement du moyen automatique provoquant la désactivation du moyen automatique.

16. Un système de suspension et de direction selon les revendications 1 à 15 dans lequel le moyen de freinage de stabilisation de la revendication 15 agit entre la poutre d'équilibre (126F) et la crosse de piston (142F) pour arrêter les déplacements desdites premières extrémités relativement à la structure de carrosserie (100).

17. Un système de suspension et de direction selon les revendications 15 et 16 dans lequel un déplacement limité est permis dans la trajectoire entre chaque roue (4) et la structure de carrosserie (100) dans l'état de mise en prise du moyen de stabilisation pour fournir une latitude limitée de suspension.

18. Un véhicule de type motocycle doté d'un système de suspension et de direction selon n'importe laquelle des revendications précédentes ayant une paire de roues arrière (5) montées sur l'extrémité de bras pivotants respectifs (106R) qui sont chacun montés indépendamment de façon à pouvoir pivoter au niveau de leurs extrémités avant sur le cadre (100) pour un déplacement pivotant sur le même axe transversal (7) qui est horizontal quand le véhicule est vertical, les bras pivotants (106R) ayant une suspension selon n'importe laquelle des revendications 1 et 7 à 17.

19. Un véhicule de type motocycle doté d'un système de suspension et de direction selon n'importe laquelle des revendications précédentes ayant une unité d'entraînement différentiel.

20. Un véhicule de type motocycle doté d'un système de suspension et de direction selon n'importe laquelle des revendications précédentes où l'espacement entre les roues appariées est suffisamment petit pour leur permettre d'être situées à l'intérieur de l'enveloppe générale du véhicule.
